# EUROPÄISCHE PATENTSCHRIFT

(11) **EP 1 383 839 B1**
(45) Veröffentlichungstag und Bekanntmachung des Hinweises auf die Patenterteilung: **15.03.2006**
(21) Anmeldenummer: 02716848.3
(22) Anmeldetag: 03.04.2002
(51) Int. Cl.: C09D 5/02, B05D 7/08, C08K 3/40

(54) **TRANSPARENTES WÄSSRIGES BESCHICHTUNGSMITTEL MIT GLASMEHL**
TRANSPARENT AQUEOUS COATING AGENT CONTAINING GLASS POWDER
AGENT DE RECOUVREMENT AQUEUX TRANSPARENT CONTENANT DU VERRE PULVERISE

(30) Priorität: 03.04.2001 DE 10116604
(43) Veröffentlichungstag der Anmeldung: 28.01.2004
(73) Patentinhaber: Clariant GmbH, 65929 Frankfurt am Main (DE); Celanese Emulsions GmbH, 61476 Kronberg/Ts. (DE)
(72) Erfinder: KUROPKA, Rolf, 55278 Selzen (DE); FICHTNER, Thomas, 55278 Dalheim (DE); GÖTZ, Erich, 95632 Wunsiedel (DE)
(74) Vertreter: Ackermann, Joachim
(86) Internationale Anmeldenummer: PCT/EP2002/003647
(87) Internationale Veröffentlichungsnummer: WO 2002/081578

(56) Entgegenhaltungen:
- WO-A-94/18136
- DD-A- 287 265
- DE-A- 3 113 136
- GB-A- 1 090 056
- DATABASE WPI Section Ch, Week 197740 Derwent Publications Ltd., London, GB; Class A82, AN 1977-71809Y XP002207768 & JP 52 102403 A (INT PAINT CO LTD), 27. August 1977 (1977-08-27)

## Beschreibung

Die vorliegende Erfindung betrifft ein transparentes Beschichtungsmittel auf Basis einer wässrigen Kunstharzdispersion enthaltend mindestens ein Borosilikatglasmehl, Verfahren zu seiner Herstellung sowie seine Verwendung, vorzugsweise zur blockfesten, kratzfesten sowie UVbeständigen Beschichtung von Untergründen, insbesondere von Holz.

Wässrige, transparente Beschichtungsmittel auf Holz werden vorzugsweise auf Basis von wässrigen Kunstharzdispersionen in Kombination mit Additiven, wie zum Beispiel Lösungsmitteln, Rheologiemodifizierungsmitteln, transparenten Pigmenten sowie Konservierungsmitteln formuliert. Nachteilig an diesen Beschichtungsmitteln ist die UV-Empfindlichkeit, welche zu einem schnellen Abbau des Beschichtungsmittels auf Holz führt. Daher werden solchen transparenten Beschichtungsmitteln häufig Substanzen, wie z.B. HALS-Additive (HALS = hindered amine light stabilizer) oder UV-Absorber zugesetzt. Diese Substanzen zeichnen sich durch eine gute Wirksamkeit aus. Sie sind allerdings sehr teuer. Ein weiterer Nachteil der bekannten, transparenten Beschichtungsmittel auf Holz ist ihre Thermoplastizität, bedingt durch die eingesetzten Kunstharzdispersionen. Dadurch bedingt lassen sich diese transparenten Beschichtungssysteme schlecht schleifen, da durch die beim Schleifen entstehende Wärme das Schleifpapier sehr schnell verklebt. Ebenso kann eine mangelnde Blockfestigkeit ein Problem darstellen.

Femer ist bekannt, dass Glas als ein anorganisches Schmelzprodukt zu verstehen ist, das erstarrt, ohne zu kristallisieren. Die Grundbestandteile, Netzwerkbildner und Netzwerkwandler liegen bei den gebräuchlichen Gläsern in Oxidform vor. Typische Glasbildner (Netzwerkbildner) sind Kieselsäure (SiO₂), Borsäure (B₂O₃), Phosphorsäure (P₂O₅) und unter gewissen Umständen auch Aluminiumoxid (Al₂O₃). Diese Stoffe sind in der Lage, Metalloxide bis zu gewissen Anteilen aufzunehmen (zu lösen), ohne den glasigen Charakter zu verlieren. Die eingebauten Oxide sind also nicht glasbildend beteiligt, verändern jedoch als "Netzwerkwandler" bestimmte physikalische Eigenschaften der Glasstruktur. Unterhalb einer Wellenlänge von ca. 310 nm ist die Transmission von Gläsern praktisch 0, d.h. insbesondere "harte" UV-Strahlen, welche Polymerfilme bzw. das darunterliegende Holz stark schädigen, werden adsorbiert.

Aus der JP-A-02 196 874 ist bekannt, dass Borosilikatgläser in Kombination mit einem Verdickungsmittel sowie einem Emulgator zur Herstellung von wärme- und feuerresistenten Beschichtungen eingesetzt werden können.

Aus der JP-A-58 037 962 ist bekannt, dass Borosilikatgläser in Kombination mit Silikon- oder Polyesterharzen zur Herstellung von hitzeresistenten Beschichtungen auf Glas eingesetzt werden können.

Aus der JP-A-07 062 272 sind transparente, anorganische Beschichtungen auf der Basis von Borosilikatgläsern bekannt, welchen durch den Zusatz von Silbersalzen eine antibakterielle bzw. Antipilzeigenschaft verliehen wird.

JP-A- 52 102 403 offentart Glasmehl enthaltende transparente Beschichtungen.

Glasmehle werden durch entsprechende Mahlprozesse aus Recyclingglas und Industrieabfall erzeugt, die entsprechend ihrer Herkunft zum Beispiel als Flachglasmehle, Borosilikatglasmehle bzw. Quarzglasmehle bezeichnet werden.

Überraschenderweise wurde nun gefunden, dass der Zusatz von Borosilikatglasmehlen zu wässrigen Holzlasuren, auf Basis von Kunstharzdispersionen die gegebenenfalls Additive enthalten, die UV-Beständigkeit, die Schleifbarkeit sowie die Blockfestigkeit deutlich verbessert.

Gegenstand der vorliegenden Erfindung ist somit ein transparentes Beschichtungsmittel auf Basis einer wässrigen Kunstharzdispersion, enthaltend mindestens ein Borosilikatglasmehl.

Vorzugsweise werden Borosilikatglasmehle eingesetzt, die keinen signifikanten Einfluß auf die Transparenz der Beschichtung haben.

Gegebenenfalls kann die wässrige Kunstharzdispersion übliche UV-adsorbierende Additive enthalten. Vorzugsweise enthält das erfindungsgemäße Beschichtungsmittel jedoch keine derartigen Additive, da an deren Stelle die Borosilikatglasmehle eingesetzt werden.

Erfindungsgemäß geeignet sind alle bekannten Borosilikatglasmehle. Als Borosilikatglasmehle, die kommerziell erhältlich sind, geeignet sind z.B. Borosilikatglasmehl 3.3 und Borosilikatglasmehl 4.2, der Firma Ziegler & Co., Wunsiedel, Deutschland. Geeignet sind auch Mischungen dieser Borosilikatglasmehle.

Wichtig ist die Mahlfeinheit dieser Borosilikatglasmehle. Diese wird häufig durch die Cilas-Kurve bestimmt. Bevorzugte mittlere Teilchengrößen liegen im Bereich von 1 bis 200 µm, besonders bevorzugt im Bereich von 5 bis 50 µm. Die gewünschten Eigenschaften zeigt das transparente Beschichtungsmittel jedoch auch dann, wenn andere Borosilikatglasmehle enthalten sind.

Borosilikatglasmehle verbessern im Vergleich zu gewöhnlichen Quarzglasmehlen weiterhin deutlich die Schleifbarkeit.

Das Borosilikatglasmehl ist in dem Beschichtungsmittel in der Menge von 3 bis 50 Gew.-%, besonders bevorzugt 5 bis 30 Gew.-% und insbesondere 5 bis 15 Gew.-%, bezogen auf die wässrige Kunstharzdispersion, enthalten.

Gegenstand der vorliegenden Erfindung ist auch ein Verfahren zur Herstellung des erfindungsgemäßen Beschichtungsmittels. Dies ist dadurch gekennzeichnet, dass zu der wässrigen Kunstharzdispersion mindestens ein Borosilikatglasmehl in der gennanten Menge zugesetzt wird.

Die erfindungsgemäßen Beschichtungsmittel werden insbesondere in Anstrichmitteln mit hoher UV-Stabilität, Blockfestigkeit und Schleifbarkeit eingesetzt.

Sie finden ebenfalls Verwendung als UV-beständige, blockfeste und gut schleifbare Beschichtungen.

Die Erfindung wird im Folgenden anhand von Ausführungsbeispielen näher beschrieben, ohne dadurch jedoch beschränkt zu werden.

Es werden verschiedene Beschichtungsmittel hergestellt. Dem Beschichtungsmittel werden Quarzglasmehl bzw. Borosilikatglasmehl zugesetzt und ihre Wirkung auf die UV-Durchlässigkeit sowie anwendungstechnische Eigenschaften, wie zum Beispiel Blockfestigkeit und Schleifbarkeit, geprüft. Die Herstellung und die Prüfung werden im Detail beschrieben.

### Beispiel 1: Herstellung einer Prüflasur ohne Zusatz eines Glasmehles (Vergleichsbeschichtung):

### Grundrezeptur der erfindungsgemäßen Holzlasur und Vergleichslasur:

| Bestandteile | Gewichtsteile |
|---|---|
| Kunstharzdispersion (Acrylat/Styrol; Festgehalt: 50% Glastemperaturen 2°C/90°C) | 740,0 |
| Ammoniak, 25 % | 2,0 |
| Wasser | 108,5 |
| Konservierungsmittel (Isothiazolinon) | 2,0 |
| Mattierungsmittel (Kieselsäure) | 15,0 |
| Entschäumer (Mineralölbasis) | 4,0 |

| Bestandteile | Gewichtsteile |
|---|---|
| Dispergiermittel (Polyacrylat) | 3,0 |
| Filmbitdehilfsmittel (Glykolether) | 20,0 |
| Filmbildehilfsmittel (Alkoxylalkohol) | 20,0 |
| Verdickungsmittel (Xanthanbasis) | 0,5 |
| Verdickungsmittel (Polyurethan) | 5,0 |
| Slipmittel (Wachsemulsion) (oder Gleitmittel) | 40,0 |
| | 960,0 |

### Beispiele 2 bis 5 und 10: Herstellung von erfindungsgemäßen, transparenten Beschichtungen durch Zusatz von Borosilikat glasmehlen:

| Holzlasur | Gewichtsteile Borosilikatglasmehl (max. 82,8 % SiO₂, mind. 10 % B₂O₃, 2 % Al₂O₃, 0,5 % K₂O, 3,7 % Na₂O Mittlere Teilchengröße 25 µm |
|---|---|
| Holzlasur 2 | 10 |
| Holzlasur 3 | 30 |
| Holzlasur 4 | 50 |
| Holzlasur 5 | 100 |
| Holzlasur 10 | 300 |

### Beispiele 6 bis 9 und 11: Herstellung von transparenten Beschichtungen unter Zusatz von 1 Gew.%, 3 Gew.%, 5 Gew.-% bzw. 10 Gew.-% Quarz glas.

| Holzlasur | Gewichtsteile Quarzglasmehl (99,7 % SiO₂, 0,15 % Na₂O, 0,15 % K₂O) Mittlere Teilchengröße 20 µm |
|---|---|
| Holzlasur 6 | 10 |
| Holzlasur 7 | 30 |
| Holzlasur 8 | 50 |
| Holzlasur 9 | 100 |
| Holzlasur 11 | 300 |

Zur Prüfung der Blockfestigkeit werden aus den Vergleichsbeschichtungen (Beispiele 1,2 and 6 bis 9) sowie den erfindungsgemäßen Beschichtungen (Beispiele 3 bis 5) Filme mit einer Spalthöhe von 50 µm auf einem nichtsaugenden Trägermaterial aufgerakelt. Nach der Trocknung werden die Prüflinge auf einer Fläche von 6,5 cm² miteinander verpresst. Die Dauer und Temperatur der Belastung ist in der nachfolgenden Tabelle aufgeführt. Anschließend werden die Prüflinge maschinell voneinander getrennt. Die notwendige Gewichtskraft ist ein Maß für die Verblockung.

Die Zusammenfassung der Ergebnisse zeigt die folgende Tabelle:

| Holzlasur | Verblockung [g/6,5 cm²] | |
|---|---|---|
| | Trocknung 1 Tg Belastung 2 Stunden bei RT | Trocknung 2 Tg 1 Stunde bei 50°C |
| Holzlasur 1 | 240 | >2000 |
| Holzlasur 2 | 230 | >2000 |
| Holzlasur 3 | 220 | 1830 |
| Holzlasur 4 | 210 | 1400 |
| Holzlasur 5 | 200 | 1070 |
| Holzlasur 6 | 230 | >2000 |
| Holzlasur 7 | 210 | 1700 |
| Holzlasur 8 | 200 | 1570 |
| Holzlasur 9 | 180 | 1120 |

Zur Prüfung der Schleifbarkeit werden sowohl die transparenten Vergleichsdispersionen (Beispiele 1, 2 und 6 bis 9) als auch die erfindungsgemäßen, transparenten Beschichtungen (Beispiele 3 bis 5) auf einer Glasplatte mit einer Spalthöhe von 200 µm aufgerakelt. Nach einer Trockenzeit von 3 Tagen bei Raumtemperatur werden die Oberflächen der Beschichtungen mit einem handelsüblichen Schleifpapier der Körnung 360 angeschliffen. Eine gute Schleifbarkeit ist gegeben, wenn beim Schleifen das Schleifpapier nicht verklebt.

| Holzlasur | Schleifbarkeit |
|---|---|
| | (1 = sehr gut; 6 = ungenügend) |
| Holzlasur 1 | 4 |
| Holzlasur 2 | 4 |
| Holzlasur 3 | 4 |
| Holzlasur 4 | 3 |
| Holzlasur 5 | 2 |
| Holzlasur 6 | 4 |
| Holzlasur 7 | 4 |
| Holzlasur 8 | 4 |
| Holzlasur 9 | 4 |

Zur Prüfung der Transmission werden von den Holzlasuren 1 bis 9 freie Filme mit einem Rakel der Spalthöhe 50 µm und 200 µm hergestellt. Die Transmission wird mit dem Cary 1 G der Firma Varian in einem Bereich von 190 nm bis 900 nm bestimmt. Die erfindungsgemäßen Holzlasuren 3 bis 5 zeigen verglichen mit der Holzlasur 1 (Vergleich) eine deutliche Reduzierung der Transmission.

## Patentansprüche

1. Transparentes Beschichtungsmittel auf Basis einer wässrigen Kunstharzdispersion, enthaltend 3 bis 50 Gew. %, bezogen auf die wässrige Kunstharzdispersion, eines Glasmehls, das ein Borosilikatglasmehl ist.

2. Beschichtungsmittel gemäß Anspruch 1, **dadurch gekennzeichnet, dass** das Glasmehl eine mittlere Teilchengröße im Bereich von 1 bis 200 µm aufweist.

3. Beschichtungsmittel gemäß Anspruch 1, **dadurch gekennzeichnet, dass** Glasmehl in der Menge von 5 bis 30 Gew. %, bezogen auf die wässrige Kunstharzdispersion, enthalten ist.

4. Verfahren zur Herstellung eines Beschichtungsmittels gemäß Anspruch 1, **dadurch gekennzeichnet, dass** zu der wässrigen Kunstharzdispersion 3 bis 50 Gew. %, bezogen auf die wässrige Kunstharzdispersion, eines Glasmehls, das ein Borosilikatglasmehl ist, zugesetzt wird.

5. Verwendung eines Beschichtungsmittels gemäß Anspruch 1 in einem Anstrichmittel mit hoher UV-Stabilität, Blockfestigkeit und Schleifbarkeit.

6. Verwendung eines Beschichtungsmittels gemäß Anspruch 1, als UV-beständige, blockfeste und gut schleifbare Beschichtung.

## Claims

1. A transparent coating composition based on an aqueous synthetic resin dispersion, comprising 3 to 50% by weight, based on the aqueous synthetic resin dispersion, of a glass flour which is a borosilicate glass flour.

2. The coating composition as claimed in claim 1, wherein the glass flour has an average particle size in the range from 1 to 200 µm.

3. The coating composition as claimed in claim 1, wherein glass flour is present in an amount of from 5 to 30% by weight, based on the aqueous synthetic resin dispersion.

4. A process for preparing a coating composition as claimed in claim 1, which comprises adding 3 to 50% by weight, based on the aqueous synthetic resin dispersion, of a glass flour which is a borosilicate glass flour to the aqueous synthetic resin dispersion.

5. The use of a coating composition as claimed in claim 1 in a coating material with high UV stability, blocking resistance, and sandability.

6. The use of a coating composition as claimed in claim 1 as a UV-resistant, blocking-resistant, and readily sandable coating.

## Revendications

1. Produit de revêtement transparent à base d'une dispersion aqueuse de résine synthétique, contenant 3 à 50 % en poids, par rapport à la dispersion aqueuse de résine synthétique, d'une poudre de verre qui est une poudre de verre au borosilicate.

2. Produit de revêtement selon la revendication 1, **caractérisé en ce que** la poudre de verre présente une granulométrie moyenne comprise dans la plage de 1 à 200 µm.

3. Produit de revêtement selon la revendication 1, **caractérisé en ce que** la poudre de verre est présente en une quantité de 5 à 30 % en poids par rapport à la dispersion aqueuse de résine synthétique.

4. Procédé de fabrication d'un produit de revêtement selon la revendication 1, **caractérisé en ce qu'**on ajoute à la dispersion aqueuse de résine synthétique 3 à 50 % en poids, par rapport à la dispersion aqueuse de résine synthétique, d'une poudre de verre qui est une poudre de verre au borosilicate.

5. Utilisation d'un produit de revêtement selon la revendication 1 dans une peinture présentant une grande stabilité aux UV, une grande résistance à l'adhérence de contact et une bonne ponçabilité.

6. Utilisation d'un produit de revêtement selon la revendication 1 en tant que revêtement résistant aux UV, résistant à l'adhérence de contact et bien ponçable.
